# EUROPEAN PATENT APPLICATION

(11) **EP 1 515 554 A1**
(43) Date of publication of application: **16.03.2005**
(21) Application number: 03077829.4
(22) Date of filing: 09.09.2003
(51) Int. Cl.: H04N 7/14, H04N 7/15, G06F 3/16, H04M 1/253, H04N 7/52

(54) **System for sending and receiving video and audio data through an IP network**

(71) Applicant: Televic NV., 8870 Izegem (BE)
(72) Inventor: Gesquiere, John, 8970 Poperinge (BE); Verhoeve, Piet, 8930 Menen (BE)
(74) Representative: Ostyn, Frans

(57) **Abstract**

The invention relates to a system for sending and receiving video and audio data from a sender PC (10) to one or more receiver PC's (20), comprising at least a sender and a receiver PC (10, 20) which are in connection with each other through an IP network (100), in which each PC (10, 20) is provided with a video codec for coding and/or decoding the video data, and in the system (1) for each PC (10, 20) an extra component (30a, 30b) is provided that is in connection with the IP network (100) and which is provided with an audio codec for the A/D and/or D/A conversion of the audio data to realize audio conversation. The extra component (30b) for the receiver PC (20) is furthermore provided to add audio data to or remove audio data from the audio data received from the sender PC (20) in a spread style, in order to cope with the synchronisation problem of the IP network (100) and to cope with loss of data.

## Description

The invention relates to a system for sending and receiving video and audio data from a sender PC to one or more receiver PC's, comprising at least a sender and a receiver PC which are in connection with each other through an IP network.

In the past, natural like conversation and communication has been around using devices constructed for that purpose specifically. Examples thereof are the common telephone. Another known system for conversation and communication is the more advanced ISDN based teleconferencing equipment. An example of such a teleconferencing equipment is described in U.S. 5,512,938, in which a PC-based teleconference terminal is described which includes a PC and a video codec unit, a network control unit and an audio codec unit which are all constructed on the same expansion board, with the video codec unit, the audio codec unit and the network control unit all connected to the computer bus so as to be able to transfer audio data, video data, data and AV multiframes between themselves. The audio codec unit is equipped with an audio clock generation unit for generating an audio sampling signal of 8 kHz through self-excited oscillation. The CPU in the PC executes frame alignment by executing the AV multiplexer/separator software stored in the memory and executes the AV multiframe conversion and separation for H series recommendation on the CCITT, as well as adjusting any shortages or surpluses of reproduction audio data which arise due to synchronization slips between the audio sampling clock and the network clock by executing the synchronization slip control software.

Several disadvantages can be described to this system:
- the coding and decoding of the audio and video data are completely performed by the hardware of the extension board;
- ISDN is not widely spread for local area networks;
- the synchronisation of the clocks of the sender and the receiver PC's occurs over the network, which means that both the clocks of the sender and the receiver PC's have to be equipped with synchronisation algorithms.

Today, general purpose personal computers (PC) have sufficient computational power available to accomplish the tasks required for interactive communication and with the recent evolutions in network technologies, sufficiently high bandwidth has become available at reasonable cost. Although it seems that all elements are available to realise a cost effective system for natural audio and video communication over a standard network (e.g. Ethernet), systems that try to realise this (e.g. Netmeeting by Microsoft) cannot truly accomplish all requirements. Indeed, the currently existing systems introduce a large latency in the communication flow. Due to this latency, the receiving party receives the signal several hundreds of milliseconds later than when it was recorded at the sender side. Due to this lag in the communication, naturally feeling interaction becomes difficult and all participants in the discussion have to learn and adapt to the latency of the system.

This latency is due to the way the operating system on the general purpose PC is constructed. It is built to be able to run multiple tasks at the same time, but not to guarantee timing requirements for a specific task. These timing requirements are needed for both the digital video as well as for the digital audio. However, for a natural like video a frame rate of 25 - 30 frames per second is sufficient, this translates in a specific timing requirement of 40 - 33 ms. In the case of natural like audio, the restrictions are much tighter, namely in the order of 10 - 20 ms.

When a communication system tries to realize low latency on a general purpose PC, it will have to limit the number of additional tasks that are run on the PC. In fact, such an approach renders the PC useless for any other task when it is being used for the communication application.

The purpose of the invention is to provide in a system for sending and receiving video and audio data from a sender to a receiver PC, in which the cost effective solutions of general purpose PC's and networks are used, while leaving the PC used, useful as a general purpose PC during the communication.

The purpose of the invention is solved by providing a system for sending and receiving video and audio date from a sender PC to one or more receiver PC's, comprising at least a sender and a receiver PC which are in connection with each other through an IP network, in which each PC is provided with a video codec for coding and/or decoding the video data, and in the system for each PC an extra component is provided that is in connection with the IP network and which is provided with an audio codec for the A/D and/or the D/A-conversion of audio data to realize audio conversation.

In this way, the digital video processing is performed by the CPU (Central Processing Unit) present in the PC equipment of the one or more sender and receiver PC's, which results in a low latency constraints of the video stream, while the audio processing (of which the low latency requirements are especially hard for the PC to realize in case of the natural audio communication) is not performed by the PC equipment, but by the extra component (which is not inherently existing in the sender and receiver PC's or in the system, but which is added to the system), through which it is possible to obtain a natural audio communication.

In a preferred embodiment of a system according to the invention, the receiver PC is provided to add audio data to or remove audio data from the audio data received from the sender PC in a spread style, in order to cope with the synchronisation problem of the IP network and to cope with loss of data.

This has the advantage that the sender PC can send data in its own pace, and only the receiver PC has to adjust to the pace of the sender PC.

In a preferred system according to the invention, said extra component is a PCI card comprising an audio codec, a DSP or CPU processor and a network interface chip.

In an advantageous system according to the invention, an optimisation technique is used for increasing the performance of the software of the video codec.

In a advantageous system, the audio data can on the one hand be originating from a digital source such as a CD-player.

On the other hand, the audio data can be originating from an analogue source such as a microphone, a VCR, a cassette or a DVD.

In a preferred system, the video data is either originating from a digital source such as a web cam or either from an analogue source such as a camera.

In an advantageous embodiment of a system according to the invention, the IP network is Ethernet.

In an other advantageous embodiment of a system according to the invention, the IP network is a wireless network.

In order to better clarify the characteristics of the present invention, and to indicate its additional advantages and particulars, a detailed description of a system for sending and receiving video and audio data from a sender PC to one or more receiver PC's will follow hereafter. It may be obvious that nothing in the following description may be interpreted as being a restriction of the protection of this invention requested in the claims.

In the attached drawings:
- ***figure 1*** is a schematic representation of a system for unidirectional communication according to the invention in which the extra component is built into the sender and receiver PC;
- ***figure 2*** is a schematic representation of a system for unidirectional communication according to the invention in which the extra component is a box next to the sender and receiver PC;
- ***figure 3*** is a schematic representation of the extra components of the sender and the receiver PC in an unidirectional communication and their place between a microphone, the IP network and a speaker.

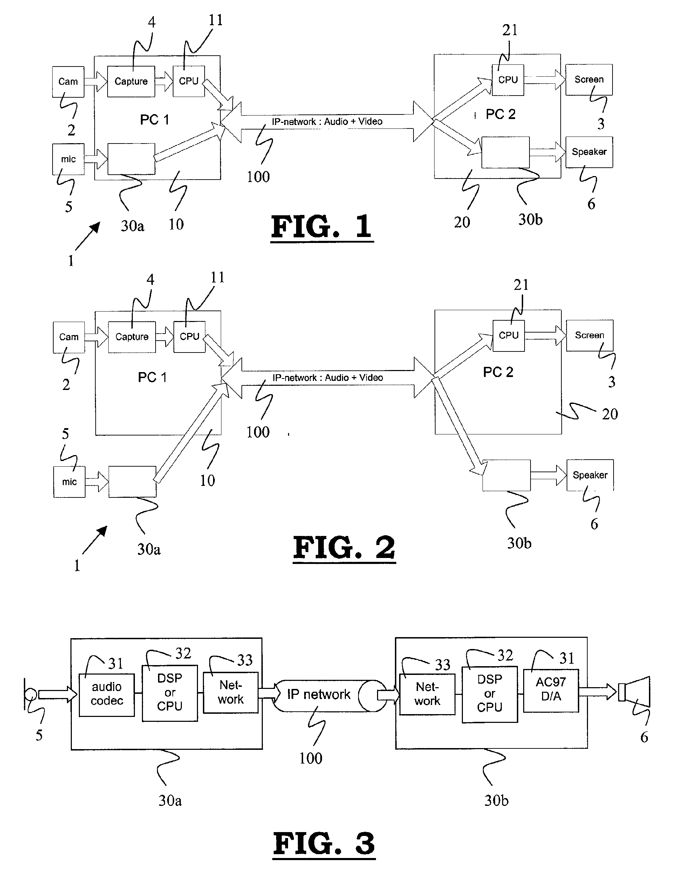

In figure 1 and 2, for simplicity, a system according to the invention for an unidirectional communication is shown. Such a system (1) for sending and receiving video and audio data from a sender PC to one or more receiver PC's, comprises at least a sender (10) and a receiver PC (20) which are in connection with each other through an IP network (100). An IP (Internet Protocol) network (100) is an asynchronous network such as Ethernet. The PC's can furthermore be in connection with each other through a wireless IP network such as IEEE 802.11 a or b.

The video data which is sent from the sender PC (10) to one or more receiver PC's (20) is originating from either an analogue source such as a camera (2) (as shown in figures 1 and 2), or either a digital source such as a webcam (not shown on the figure). The video data is received by the receiver PC (20) on a screen (3) which is in connection with the receiver PC (20).

Because of the fact that with video communication, the human eye is much more tolerant towards errors in the pictures or in the exact timing of the frame rate, the video coding/decoding task can run on the PC system due to the low latency constraints of the video stream.

When the video data is originating from a camera (2), as shown in figures 1 and 2, a capture card (4) is provided in the sender PC (10) to digitalise video. Such a capture card can for example be a WIN TV go-card from Hauppage. When a webcam is used, the capture card (4) is not needed.

The digital video data are subsequently sent to the CPU (Central Processing Unit) (11) of the sender PC (10), and are then sent to the receiver PC through the IP network. The received video data are then decoded via the CPU (21) of the receiver PC (20) and shown on the screen (3).

To achieve real-time low latency behaviour for the video codec, advanced optimisation techniques have to be used to increase the performance of the software.

Since the low latency requirements for audio signals are especially hard for the PC's to realize in case of a natural communication, not only due to the harsh timing requirements but also to the sensitive nature of human ears which are capable to detect very small errors in the audio signal, an extra component (30a, 30b) is added to the system (1). By removing the audio handling task from the operating system running on the general purpose PC's (10, 20), resources become available that enable normal 'general purpose' use of the PC system.

The audio data is originating from an analogue source such as a micro (5) (as shown in figures 1 and 2), a tape, a cassette or a DVD. The audio data can also originate from other analogue sources. The audio data can also be originating from a digital source such as a CD-player. The audio data is sent through the extra component (30a) of the sender PC (10) to the IP network (100) and subsequently through the extra component (30b) of the receiver PC (20) to the speaker (6) which is in connection with the receiver PC (20).

The system according to the invention can also be equipped for a bi-directional communication. In such a communication, one or more PC's can serve as sender and receiver and are provided with a source for sending and receiving audio data and with a source for sending and receiving video data (i.e. each PC has for instance a camera, a microphone, a screen and a speaker).

The extra component (30a, 30b) for the sender and receiver PC (10, 20) can either be built into the sender and the receiver PC (10, 20), as shown in figure 1, or can be a box next to it, as shown in figure 2.

As shown in figure 3, the extra component (30a, 30b) consists of a PCI (Peripheral Component Interconnect)-card which comprises an audio codec (31) (for instance an AC97 codec), a DSP (Digital Source Processor) or CPU (Central Processing Unit) processor (32) and a network interface chip (33) (for instance an ASIX network interface chip). An AC97codec is a chip containing an analogue mixer, Digital-to-Analogue converters and Analogue-to-Digital converters.

The system (1) according to the invention uses an IP network (100), which is an asynchronous network. This means that the clock frequencies of the sender PC (10) and the receiver PC (20) are not synchronised. Although all devices are equipped with crystals generating similar clock frequencies, due to imperfection in the crystal fabrication process, the clock frequencies can differ over several tens of ppm (parts per million). Although these deviations are small, they are harmful to the communication in the long run. Either the sender PC (10) will send its data too fast or too slow with respect to the receiver PC (20). In the first case, this can lead to a build up of latency, while in the second case, the receiver PC (20) will eventually run out of audio date resulting in a small silence period in the audio signal (typically perceived as a 'crack' in the audio). Also loss of data can occur when transmitting these data over an IP network (100).

This synchronisation problem is solved by adding or removing data when applicable. When the sender PC (10) sends faster than the receiver PC (20), the receiver PC (20) will have an excess of audio data at a certain point in time. At that moment, the extra component (30b) for the receiver PC (20) will decide to drop audio information in order to reduce the excess amount of data. To ensure that this operation is not audible for the end user, the dropping of data is spread over a number of audio frames, hence realising a smooth inaudible loss of data. In the case that the sender PC (10) sends slower than the receiver PC (20) can receive the data, the extra component (30b) of the receiver PC (20) will create additional data by reusing audio samples in the audio stream. This is also realised in a spread style to eliminate the audible distortions.

### Example

Network: standard Ethernet, 100 Mbps
PC: standard of the shelf PC, running Microsoft Windows
Video Codec: MPEG4, ISO-compatible, optimised for real time behaviour
Audio component: based on AC97codec, DSP processor (Analogue Devices) and
ASIX network interface chip

## Claims

1. System for sending and receiving video and audio data from a sender PC (10) to one or more receiver PC's (20), comprising at least a sender and a receiver PC (10, 20) which are in connection with each other through an IP network (100), **characterised in that** each PC (10, 20) is provided with a video codec for coding and/or decoding the video data, and in the system (1) for each PC (10, 20) an extra component (30a, 30b) is provided that is in connection with the IP network (100) and which is provided with an audio codec for the A/D and/or D/A conversion of the audio data to realize audio conversation.

2. System according to claim 1, **characterised in that** the extra component (30b) for the receiver PC (20) is provided to add audio data to or remove audio data from the audio data received from the sender PC (20) in a spread style, in order to cope with the synchronisation problem of the IP network (100) and to cope with loss of data.

3. System according to claim or 2, **characterised in that** said extra component (30a, 30b) is a PCI-card comprising an audio codec (31), a DSP or CPU processor (32) and a network interface chip (33).

4. System according to any one of claims 1 to 3, **characterised in that** an optimisation technique is used for increasing the performance of the software of the video codec.

5. System according to any one of claims 1 to 4, **characterised in that** the audio data is originating from a digital source such as a CD-player.

6. System according to any one of claims 1 to 5, **characterised in that** the audio data is originating from an analogue source such as a micro (5), a VCR, a cassette or a DVD.

7. System according to any one of claims 1 to 7, **characterised in that** the video data is originating from a digital source such as a web cam.

8. System according to any one of claims 1 to 7, **characterised in that** the video data is originating from an analogue source such as a camera (2).

9. System according to any one of claims 1 to 8, **characterised in that** the IP network (100) is Ethernet.

10. System according to any one of claims 1 to 8, **characterised in that** the IP network (100) is a wireless network.
